# EUROPEAN PATENT APPLICATION

(11) **EP 3 736 715 A1**
(43) Date of publication of application: **11.11.2020**
(21) Application number: 19173681.8
(22) Date of filing: 10.05.2019
(51) Int. Cl.: G06F 21/40, H04L 29/06

(54) **MANAGING ADMISSION TO A DISTRIBUTED DATABASE BASED ON A CONSENSUS PROCESS**

(71) Applicant: Siemens Aktiengesellschaft, 80333 München (DE)
(72) Inventor: Aigner, Tobias, 81543 München (DE); Sauer, Markus, 81739 München (DE); Zupan, Nejc, 80337 München (DE)

(57) **Abstract**

A method of managing a data network comprises receiving a request for verification of an unverified device in a distributed database maintained by the data network. The method further comprises evaluating the request by a plurality of verified devices of the data network to provide a plurality of verification results respectively indicating whether the verified device accepts or refuses verification of the unverified device. The method further comprises controlling admission of the unverified device to the distributed database based on a consensus process depending on the plurality of verification results.

## Description

### TECHNICAL FIELD

Various embodiments of the invention enable managing an admission to a distributed database maintained by the data network based on a consensus process, wherein the consensus process depends on a plurality of verification results of a plurality of verified devices implemented in the data network.

### BACKGROUND

Verification of new devices in an industrial network environment is a major issue, in order to provide a reliable and secure operation of distributed databases, as these processes ensure to prevent undesired access to the distributed database. However, such verification processes usually have to be performed by an IT specialist in a manual manner and commonly imply a troublesome and burdensome working effort. Due to these reasons, the verification processes are often delegated to a third party service.

Due to the progressive technological developments, such as Internet-of-Things, there is a rising demand to implement a higher number of devices such a distributed database, thereby further increasing the time-intensive, manual working effort for verification procedures. In the industrial environment, such a time consuming approach of allocating the working time of an IT specialist is in many cases considered unsatisfying.

Apart from this, documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 2891266 B1, EP 2961091 A1, EP 2961093 A1, EP 3028140 B1, EP 2930610 B1, EP 2940620 B1, EP 2899714 A1, EP 2981926 A0, EP 3125492 B1, EP17195125, EP17211075, EP18178316, EP18156084, EP18151345, EP18167702, EP18153594, EP18162050, EP18178498, EP18152117, EP18150133, EP18169145, EP17210647, EP18150146, EP18167486, EP18168670, EP18162049, EP17203819, EP18157168, EP18169421, EP17210253, EP17205224, EP18169269, EP18169254, EP17210288, EP18153025, EP17200614, EP18156308, EP17201758, EP18156511, EP18159485, EP17203573, EP 17175275, EP17186826, WO 2018069271 A1, PCT/EP2017/082508, EP17179823, WO 2017050348 A1, WO 2018068965 A1 and US 8 843 761 B2 are known to a skilled person.

### SUMMARY

Therefore, there is a demand for means enabling to reliably verify new devices in a distributed database by means of a preferably low working effort.

It is an object of the present disclosure to provide means for reliably verify new devices in a distributed database by means of a preferably low working effort.

A method of managing a data network based on a consensus process as well as a device adapted to contribute to a data network management are provided. Further embodiments are defined in the dependent claims.

According to an embodiment, a method of managing a data network is disclosed. The method comprises receiving a request for verification of an unverified device in a distributed database maintained by the data network. The method further comprises evaluating the request by a plurality of verified devices of the data network to provide a plurality of verification results respectively indicating whether the verified device accepts or refuses verification of the unverified device. The method further comprises controlling admission of the unverified device to the distributed database based on a consensus process depending on the plurality of verification results.

Such an approach is based on the finding that based on the consensus process depending of the verification results of the plurality of verified devices, the method offers an entirely automated verification procedure of an unverified device in a distributed database. Further, due to the controlling admission of the unverified device based on a consensus process, which depends on the verification results of a plurality of different verified devices, malfunctions and/or manipulations of an individual verified device does not carry weight, since the verification result of such a device will be outvoted in the consensus process by a plurality of normally operating verified devices.

According to another embodiment, a device is disclosed, which is adapted to operate in a data network that may maintain a distributed database. Hereby, the device comprises a receiving unit, which is adapted to receive a request for verification of an unverified device in the distributed database. The device further comprises an evaluation unit, which is adapted to evaluate the request to provide a verification result indicating whether the request for verification is to be accepted or refused. The device further comprises an output unit, which is adapted to output the verification result, wherein the verification result is configured to be used in a consensus process, in order to control admission of the unverified device to the distributed database.

Such an approach provides for technical means, based on which advantages of the method outlined above may be achieved in a preferably simple and efficient manner.

A verification within the meaning of the present disclosure may refer to a test procedure, based on which an unverified device may achieve access to a data network and/or a distributed database. Hereby, identity information of the unverified device may be taken into account. Hereby, it may be required that the verification will be requested by the unverified device.

A distributed database within the meaning of the present disclosure may refer to a database in which the stored data is distributed to different devices located in a common data network. The distributed database may or may not be controlled by a central entity of the data network. The distributed database may be configured as a Blockchain based database.

A verification result within the meaning of the present disclosure may refer to a decision with respect to a verification that is requested. The verification result may be outputted to an unverified device. Potential verification results may comprise the content "verification accepted" and/or "verification refused". According to some examples, the verification result may also be named a "vote".

A consensus process within the meaning of the present disclosure may refer to an algorithm-based global decision of a data network, which depends on a plurality of local evaluations provided in the data networks. Hereby, the local evaluations may refer to verification results evaluated by a plurality of devices verified in the data network. The global decision may be intended to control an admission of an unverified device to the distributed database. The consensus process may be based on at least one of a majority consensus, a practical byzantine fault tolerance algorithm, a raft consensus algorithm and a paxos-based consensus.

In an embodiment of the method, the consensus process is based on at least one of a majority consensus, a practical byzantine fault tolerance algorithm, a raft consensus algorithm and a paxos-based consensus.

Thereby, a desired controlling admission of the unverified device based on a plurality of verification results of a plurality of verified device may be achieved by means of a preferably efficient data processing.

In another embodiment, the method comprises transmitting the plurality of verification results using at least one of a) a gossip protocol and b) broadcast messages.

Thereby, an improved forwarding speed of the verification results may be achieved, which enables a preferably early provision of the verification results to be used by the consensus process. In doing so, a faster controlling result with respect to the admission of the unverified device to the distributed database upon request verification may be achieved, thereby enabling a faster access of an accepted unverified device to the distributed database.

In another embodiment of the method, the request indicates manufacturer information of the unverified device, and the respective evaluating of the request depends on the manufacturer information.

Thereby, the method enables to a) accept verification by a verified device in case that the manufacturer of the respective verified device corresponds to the manufacturer of the unverified device, and to b) refuse verification by a verified device in case that the manufacturer of the respective verified device corresponds to the manufacturer of the unverified device. In this way, only unverified devices may be evaluated for acceptance of verification, which fulfill the technical requirements for communication with the devices already verified in the distributed database. Thus, the method enables to avoid linkages with devices, which do not exhibit communication suitability in the network.

In another embodiment of the method, the request indicates a communication history of the unverified device, and the evaluating of the request depends on the communication history.

Thereby, the method enables to control admission of the unverified device to the distributed database based on a communication behavior of the unverified device executed previously. Since the previous communication behavior will most likely correspond to the prospective communication behavior, such techniques may facilitate the recognition of devices, which are undesired to achieve access to the distributed database. Hereby, the security level of the distributed database access may be improved.

In another embodiment of the method, the request comprises a cryptographic key associated with a manufacturer of the unverified device, and the cryptographic key enables decryption of encrypted data stored in the verified device depending on a manufacturer of the verified device.

Thereby, an encryption code mechanism is implemented, based on which a controlled admission of the respective unverified device may be achieved. The code mechanism, which may be implemented by a specific manufacturer, may therefore achieve decryption in case that the unverified device matches the respective verified device. This may enable an accepted verification of the respective verified device in case that the unverified device and the respective verified device fulfill technical communication requirements.

In another embodiment of the method, the admission of the unverified device to the distributed database is controlled by a central entity of the data network.

Since in this case an individual entity carries admission control, non-constructive data transfer and data processing may be avoided. Therefore, a processing efficiency of the underlying method may be improved.

In another embodiment, the method further comprises admitting participation of the unverified device in the distributed database based on the consensus process, transmitting instruction data, indicating the admitted participation, to the plurality of verified devices and configuring the instruction data to prevent from linking the at least one verified device with the unverified device in the distributed database based on the verification result provided by at least one of the verified devices. In an embodiment of the method, the instruction data is configured to prevent from linking the at least one verified device and the unverified device if the verification result provided by the at least one of the verified devices indicates that verification of the unverified device is refused.

Thereby, based on the global admission control of the data network and the local verification result of the respective verified device, each verified device may decide, whether it locally follows its own recommendation or the recommendation of the network. Such an approach provides for an improved flexibility to any verified device, which can decide whether to use an improved security protection by means of locally refusing the linkage or whether it uses an improved crosslinking by means of locally accepting linkage admission recommendation of the data network.

In another embodiment of the method, the distributed database is a Blockchain based database.

Due to the cryptographic character of the Blockchain technology, the security level of the respective distributed database may be further improved.

In another embodiment of the method, the data network is a standalone network or part of a global network.

According to the first alternative, the security level for controlling admission of the unverified device to the distributed database is further improved, since the standalone network may not be manipulated from outside the network. According to the second alternative and based on the high number of connected devices, the distributed database may be flexibly extended by further available devices and in accordance with the actual user needs.

In another embodiment of the method, the data network is an Internet-of-Things based network.

Thereby, the method enables an automated and reliable extension of the Internet-of-Things based network, which enables an efficient data distribution within the network, when a recently acquired physical object intends to join the network.

In another embodiment, the device is adapted to operate in a data network, wherein the data network executes the method according to any one of the embodiments disclosed herein.

A majority consensus within the meaning of the present disclosure may refer to a consensus decision in a data network, wherein the type of decision depends on whether the relative amount of equal local evaluations provided in the data network exceeds a certain threshold. Hereby, equal local evaluations may refer to either an accepted verification result given by several verified devices or a refused verification result given by several verified devices. As an example, a majority consensus may refer to a situation in which more than 50% of the entire amount of local evaluations indicate acceptance or refusal of the verification of the unverified device.

A communication history within the meaning of the present disclosure may refer to a set of transmitted and/or received communication data of a device, which have been recorded in the past. Hereby, the communication history may be indicative for a communication behavior of the device.

A central entity within the meaning of the present disclosure may refer to any technical means implemented in the data network, which may be adapted to control participation on the distributed database. The central entity may be configured in an independent manner or may be integrated in at least one of the devices of the data network, e.g. the verified devices.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other elements, features, steps and characteristics of the present disclosure will be more apparent from the following detailed description of embodiments with reference to the following figures:
- Figure 1: schematically illustrates a data network, in which the method according to the various examples may be executed.
- Figure 2: schematically illustrates a flowchart of a method of managing a data network according to various examples.
- Figure 3: schematically illustrates a communication diagram referring to a method of managing a data network according to various examples.
- Figure 4: schematically illustrates a verified device adapted to operate in a data network that may maintain a distributed database according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

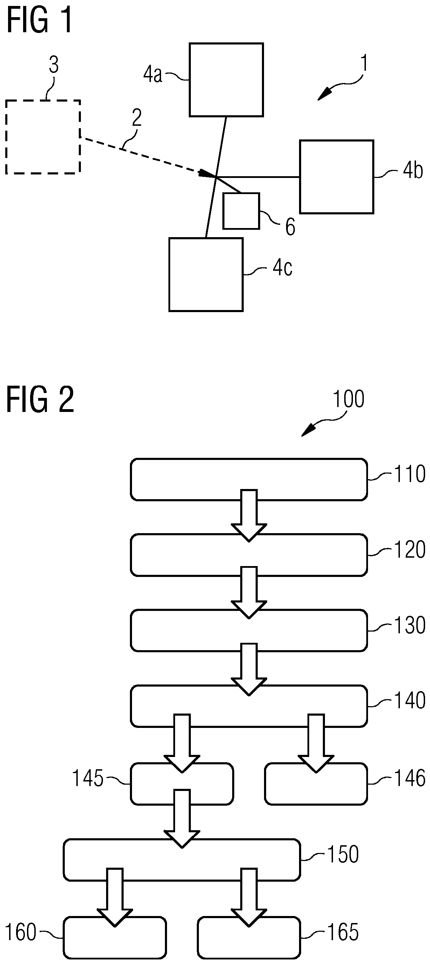

Figure 1 schematically illustrates a data network 1, in which a method 100 according to the various examples may be executed. The data network 1 may be adapted to maintain a distributed database using a plurality of verified devices 4a-4c. Hereby, the distributed database may be a Blockchain based database. The data network 1 may be configured as a standalone network, i.e. is not connected to the global internet, or may also be configured as a global network. The date network 1 may further be configured as an Internet-of-Things based network.

According to various examples, the data network 1 may comprise a central entity 6. Hereby, the central entity 6 may contribute to participation on the distributed database maintained by the data network 1. However, according to other examples of the present disclosure, another configuration of the data network 1 is intended, which does not provide for a central entity, and is therefore configured in an entirely decentralized manner.

According to the example depicted in Figure 1, an unverified device 3 intends to participate on the distributed database maintained by the data network 1. In such a situation, the unverified device 3 may send a request 2 for verification in the distributed database maintained by the data network 1. Hereby, the request may be received by any of the central entity 6, any of the plurality of verified devices 4a-4c or any other entities of the data network 1.

Figure 2 schematically illustrates a flowchart of a method 100 of managing a data network 1.

At 110, a request 2 for verification of an unverified device 3 in a distributed database maintained by the data network 1 may be received. Hereby, the request 2 may comprise a cryptographic key associated with a manufacturer of the unverified device 3, wherein the cryptographic key enables decryption of encrypted data stored in the verified device 4a-4c depending on a manufacturer of the verified device 4a-4c.

At 120, the request 2 may be evaluated by a plurality of verified devices 4a-4c of the data network 1 to provide a plurality of verification results 5a-5c respectively indicating whether the verified device 4a-4c accepts or refuses verification of the unverified device 3. According to various examples, the request 2 may indicate manufacturer information of the unverified device 3, wherein the respective evaluating 120 of the request 2 depends on the manufacturer information. This may be achieved by embedding a manufacturer signature on a chip and software, respectively, which may be used for signing transmitting data. According to further examples, the request 2 may indicate a communication history of the unverified device 3, wherein the evaluating 120 of the request 2 depends on the communication history.

Such a history may refer to an earlier behavior of the unverified device 3 and may be matched with a conventional or referential behavior of the unverified device 3.

At 130, the plurality of verification results 5a-5c may be transmitted using at least one of a) gossip protocol and b) broadcast messages.

At 140, admission of the unverified device 3 to the distributed database may be controlled based on a consensus process depending on the plurality of verification results 5a-5c. Hereby, the consensus process may be based on at least one of a majority consensus, a practical byzantine fault tolerance algorithm, a raft consensus algorithm and a paxos-based algorithm. According to various examples, the admission of the unverified device 3 to the distributed database may be controlled by a central entity 6 of the data network 1.

At 146, a first alternative is depicted, according to which the admission of the unverified device 3 to the distributed database may be refused. According to such a scenario, the request 2 for verification of the unverified device 3 in the distributed database has been refused by the data network 1 and the method 100 may be finished.

At 145, a second alternative is depicted, according to which the admission of the unverified 3 to the distributed database may be accepted. According to such a scenario, the request 2 for verification of the unverified device 3 in the distributed database has been accepted by the data network 1 and the method 100 may be continued.

At 150, and based on the second alternative of 145 outlined above, instruction data 7, which indicate the admitted participation, may be transmitted to the plurality of verified devices 4a-4c. Such instruction data 7 may be configured to carry information for linking any of the verified devices 4a-4c with the unverified device 3 and may be received by the verified devices 4a-4c.

At 160, a first alternative is depicted, according to which the instruction data 7 may be prevented from linking the at least one verified device 4a-4c with the unverified device 3 in the distributed database depending on the verification result 5a-5c of the at least one verified device 4a-4c. Specifically, the instruction data 7 may be prevented from linking the at least one verified device 4a-4c and the unverified device 3 if the verification result 5a-5c provided by the at least one of the verified devices 4a-4c indicates that verification of the unverified device 3 is refused.

At 165, a second alternative is depicted, according to which the instruction data 7 may link the at least one verified device 4a-4c with the unverified device 3 in the distributed database.

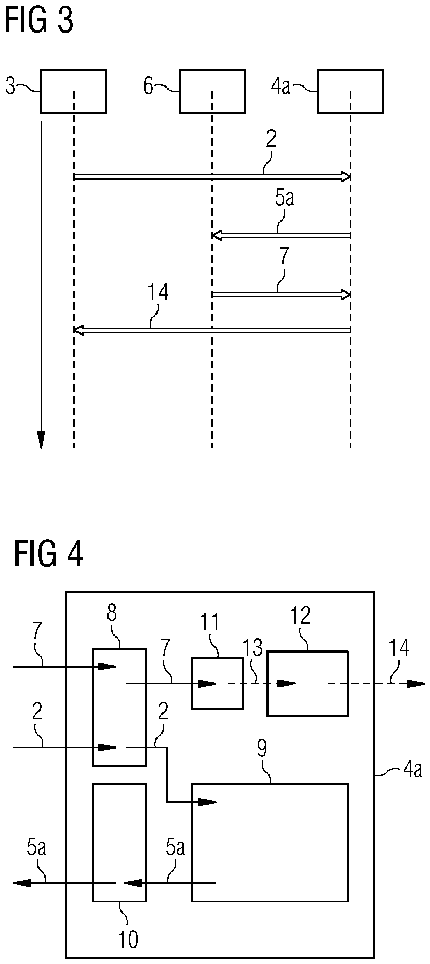

Figure 3 schematically illustrates a communication diagram referring a method 100 of managing a data network 1 according to various examples. Hereby, the communication diagram may refer to certain specifications of the method 100 outlined with respect to Figure 2, and may also be executed in a data network 1 outlined with respect to Figure 1.

The diagram according to Figure 3 depicts signal transmission over time, when the method 100 according to various examples is executed, in between an unverified device 3, a central entity 6 and a verified device 4a.

At first, a request 2 for verification may be transmitted from the unverified device 3, and may be received by the verified devices 4a. After evaluating the request 2 by the verified device 4a, the verified device 4a may transmit a verification result 5a, indicating whether the verified device 4a accepts or refuses verification of the unverified device 3, to the central entity 6. Based on a plurality of verification results 5a-5c including the verification result 5a of the verified device 4a, the central entity 6 may execute a consensus process for controlling admission of the unverified device 3 to the distributed database, and may successively transmit respective instruction data 7 to the verified device 4a. In case that the instruction data 7 are not prevented by the verified device 4a to link the verified device 4a with the unverified device 3, linkage data 14 enabling linking the verified device 4a with the unverified device 3 may then be transmitted from the verified device 4a to the unverified device 3.

Figure 4 schematically illustrates a verified device 4a adapted to operate in a data network 1 that may maintain a distributed database according to various examples.

According to this, the verified device 4a may comprise a receiving unit 8, which is adapted to receive a request 2 for verification of an unverified device 3 in the distributed database. The verified device 4a may further comprise an evaluation unit 9, which is adapted to evaluate the request 2 to provide a verification result 5a indicating whether the request 2 for verification is to be accepted or refused. The verified device 4a may further comprise an output unit 10, which is adapted to output the verification result 5a, wherein the verification result 5a is configured to be used in a consensus process, in order to control admission of the unverified device 3 to the distributed database.

In addition, the receiving unit 7 may further be adapted to receive instruction data 7 indicating the participation of the unverified device 3 in the distributed database based on a consensus process. In such a configuration, the verified device 4a may further comprise a filter unit 11, which may adapted to prevent instruction data 7 from linking the verified device 4a with the unverified device 3 in the distributed database depending on the verification result 5a of the verified device 4a. Additionally, and with respect to cases, in which the instruction data 7 are not prevent to enable linkage, the verified device 4a may further comprise a linkage unit 12, which is adapted to output linkage data to the unverified device 3 for enabling linking in between the verified device 4a and the unverified device 3.

According to further examples (not depicted), the network topology could be realized by a peer-to-peer protocol. Further, a decentralized service could be governed by a single or multiple organization.

## Claims

1. A method (100) of managing a data network (1), the method (100) comprising:
receiving (110) a request (2) for verification of an unverified device (3) in a distributed database maintained by the data network (1);
evaluating (120) the request (2) by a plurality of verified devices (4a-4c) of the data network (1) to provide a plurality of verification results (5a-5c) respectively indicating whether the verified device (4a-4c) accepts or refuses verification of the unverified device (3); and
based on a consensus process depending on the plurality of verification results (5a-5c), controlling (140) admission of the unverified device (3) to the distributed database.

2. The method (100) of claim 1, wherein the consensus process is based on at least one of a majority consensus, a practical byzantine fault tolerance algorithm, a raft consensus algorithm and a paxos-based consensus.

3. The method (100) of any of the preceding claims, comprising:
transmitting (130) the plurality of verification results (5a-5c) using at least one of a) a gossip protocol and b) broadcast messages.

4. The method (100) of any of the preceding claims, wherein the request (2) indicates manufacturer information of the unverified device (3), and wherein the respective evaluating (120) of the request (2) depends on the manufacturer information.

5. The method (100) of any of the preceding claims, wherein the request (2) indicates a communication history of the unverified device (3), and wherein the evaluating (120) of the request (2) depends on the communication history.

6. The method (100) of any of the preceding claims, wherein the request (2) comprises a cryptographic key associated with a manufacturer of the unverified device (3), and wherein the cryptographic key enables decryption of encrypted data stored in the verified device (4a-4c) depending on a manufacturer of the verified device (4a-4c).

7. The method (100) of any of the preceding claims, wherein the admission of the unverified device (3) to the distributed database is controlled by a central entity (6) of the data network (1).

8. The method (100) of any of the preceding claims, comprising:
based on the consensus process, admitting (145) participation of the unverified device (3) in the distributed database;
transmitting (150) instruction data (7), indicating the admitted participation, to the plurality of verified devices (4a-4c), and wherein the method (100) further comprises:
based on the verification result (5a-5c) provided by at least one of the verified devices (4a-4c), preventing (160) the instruction data (7) from linking the at least one verified device (4a-4c) with the unverified device (3) in the distributed database.

9. The method (100) of claim 8, wherein the instruction data (7) are prevented from linking the at least one verified device (4a-4c) and the unverified device (3) if the verification result (5a-5c) provided by the at least one of the verified devices (4a-4c) indicates that verification of the unverified device (3) is refused.

10. The method (100) of any of the preceding claims, wherein the distributed database is a Blockchain based database.

11. The method (100) of any of the preceding claims, wherein the data network (1) is a standalone network or part of a global network.

12. The method (100) of any of the preceding claims, wherein the data network (1) is an Internet-of-Things based network.

13. A device (4a-4c), adapted to operate in a data network (1) that may maintain a distributed database, comprising:
a receiving unit (8), adapted to receive a request (2) for verification of an unverified device (3) in the distributed database,
an evaluation unit (9), adapted to evaluate the request (2) to provide a verification result (5a-5c) indicating whether the request (2) for verification is to be accepted or refused; and
an output unit (10), adapted to output the verification result (5a-5c), wherein the verification result (5a-5c) is configured to be used in a consensus process, in order to control admission of the unverified device (3) to the distributed database.

14. The device (4a-4c) according to claim 13, which is adapted to operate in a data network (1), wherein the data network (1) executes the method (100) according to any one of claims 1 to 12.
